# FASCICULE DE BREVET EUROPEEN

(11) **EP 0 554 932 B1**
(45) Date de publication et mention de la délivrance du brevet: **15.05.2002**
(21) Numéro de dépôt: 93200160.5
(22) Date de dépôt: 25.01.1993
(51) Int. Cl.: C08L 81/02, C08L 77/00, C08K 3/22

(54) **Compositions à base de polysulfure de phénylène**
Polyphenylensulfidzusammensetzung
Polyphenylene sulphide compositions

(30) Priorité: 05.02.1992 BE 9200122
(43) Date de publication de la demande: 11.08.1993
(73) Titulaire: SOLVAY (Société Anonyme), 1050 Bruxelles (BE)
(72) Inventeur: Dubois, Michel, B-1370 Jodoigne (BE); Guyot, Béatrice, B-1030 Bruxelles (BE); Thommeret, Richard, B-1040 Bruxelles (BE)
(74) Mandataire: Dufrasne, Eugène

(56) Documents cités:
- EP-A- 0 278 555
- US-A- 5 021 497
- DATABASE WPIL Week 9117, 9 Novembre 1988 Derwent Publications Ltd., London, GB; AN 88-260861
- DATABASE WPIL Week 8837, 26 Juin 1991 Derwent Publications Ltd., London, GB; AN 91-122383

## Description

La présente invention concerne des compositions à base de polysulfure de phénylène. Elle concerne plus précisément des compositions contenant un polysulfure de phénylène de propriétés électriques améliorées.

Le polysulfure de phénylène (dénommé ci-après brièvement PPS) présente une excellente stabilité thermique et une très bonne résistance chimique qui en font un matériau de choix pour le moulage de pièces utilisables notamment dans des applications électriques et électroniques et dans l'industrie automobile.

Dans les applications électriques et électroniques exigeantes (coupe-circuits, barreaux multipolaires, ampoules de coupure ...), il convient toutefois de disposer d'un matériau qui allie à la résistance thermique, un bon compromis de deux propriétés électriques qui sont la résistance au courant de cheminement et la résistance à l'arc.

On a déjà tenté d'atteindre cet objectif en proposant des compositions à base de PPS contenant de l'hydroxyde de magnésium et, éventuellement, des fibres de verre (demande de brevet japonais (Kokai) publiée sous le numéro 89-318068 (UBE INDUSTRIES)).

Si ces compositions présentent une bonne résistance thermique et une bonne résistance à l'arc, leur résistance au courant de cheminement est insuffisante.

L'invention vise à fournir des compositions à base de PPS présentant à la fois, à un niveau suffisant, une résistance thermique, une résistance au courant de cheminement et une résistance à l'arc.

La présente invention concerne à cet effet des compositions contenant pour 100 parties en poids de polysulfure de phénylène : 10 à 300 parties en poids d'un polyamide, et 20 à 350 parties en poids d'un hydroxyde métallique dont le constituant principal est l'hydroxyde de magnésium.

Le polysulfure de phénylène (PPS) contenu dans les compositions selon l'invention est un polymère comprenant au moins 70 % molaires, de préférence au moins 90 % molaires d'unités récurrentes de p-sulfure de phénylène de formule

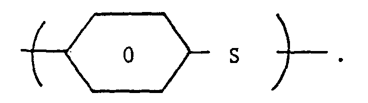

Les PPS contenant au moins 70 % molaires d'unités récurrentes de p-sulfure de phénylène confèrent aux compositions selon l'invention une stabilité thermique et une résistance chimique suffisantes. Moins de 30 % molaires des unités récurrentes contenues dans le PPS peuvent être choisies parmi celles présentant les formules de structure ci-après :

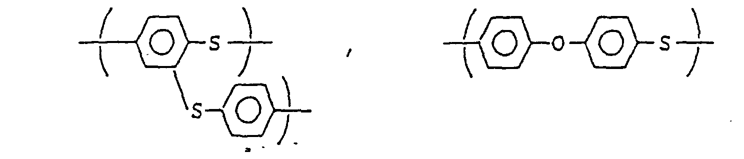

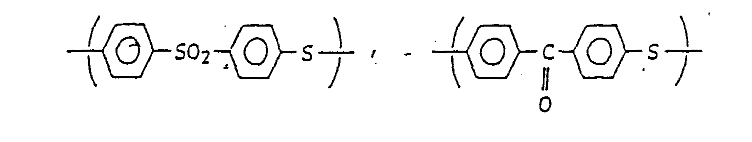

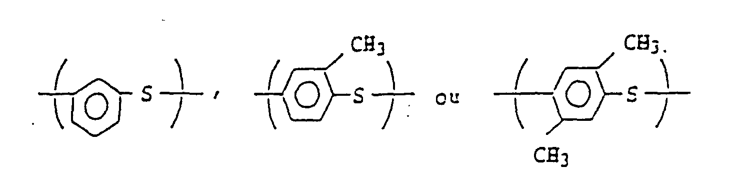

Les procédés de fabrication des PPS utilisables selon l'invention sont bien connus. Ils peuvent tous être utilisés. Un procédé comprend le chauffage d'un sulfure de métal alcalin, le plus souvent du sulfure de sodium hydraté, dans un solvant polaire pour en éliminer l'eau d'hydratation, suivi de l'addition d'un composé aromatique dihalogéné, en particulier le p-dichlorobenzène, et de la polymérisation à température plus élevée (voir par exemple brevet US-A-3 354 129 (PHILLIPS PETROLEUM)). Le poids moléculaire du PPS obtenu peut être augmenté de manière connue par post-traitement oxydatif conduisant à des produits ramifiés ou par addition d'agents connus d'augmentation du poids moléculaire (esters, anhydrides, carboxylates et sulfonates de métaux alcalins...) au milieu de polycondensation, conduisant à des produits linéaires à haut poids moléculaire.

Le poids moléculaire du PPS utilisable selon l'invention peut varier dans de larges mesures. Il est généralement tel que l'indice de fluidité du PPS est compris entre 5 g/10 min et 10 000 g/10 min, de préférence entre 10 g/10 min et 500 g/10 min (déterminé selon la norme ASTM D 1238-74 T, à une température de 315°C, sous une charge de 5 kg).

Le PPS utilisable selon l'invention peut contenir des additifs conventionnels en quantités qui ne sont pas préjudiciables aux propriétés des compositions selon l'invention. A titre de pareils additifs, on peut citer notamment : les antioxydants et les stabilisants thermiques, tels que par exemple les phénols empêchés, les thioesters et les phosphites ; les agents anti-UV, tels que par exemple le résorcinol, le benzotriazole et la benzophénone ; les agents ignifugeants, tels que par exemple les sels d'antimoine, les chlorophosphates d'aryle et les paraffines chlorées, les lubrifiants, tels que par exemple le graphite, le bisulfure de molybdène et les silicones ; les agents anti-corrosion, tels que par exemple les carbonates de métaux alcalins ; les pigments, tels que par exemple le dioxyde de titane et le sulfure de zinc ; les agents de mise en oeuvre, tels que par exemple les esters aromatiques de l'acide phosphorique et le microtalc ; les agents de contrôle du degré de réticulation, tels que par exemple les peroxydes ; les accélérateurs de réticulation, tels que par exemple les sels métalliques d'acide thiophosphinique ; les inhibiteurs de réticulation, tels que par exemple les dicarboxylates de dialkylétain ; les agents de renforcement au choc, tels que par exemple les copolymères élastomériques dérivés d'oléfines et d'esters glycidyliques d'acides carboxyliques alpha-beta insaturés ; etc.

Les compositions selon l'invention contiennent également un polyamide (dénommé ci-après PA). Ce polyamide est généralement choisi parmi les PA dérivés d'amines aliphatiques, alicycliques et aromatiques, d'une part, et d'acides dicarboxyliques aliphatiques, alicycliques et aromatiques, d'autre part.

Des exemples d'amines utilisables sont l'hexaméthylène diamine, la décaméthylène diamine, la dodécaméthylène diamine, les 2,2,4- et 2,4,4-triméthylhexaméthylène diamines, les 1,3 et 1,4-bis-(aminométhyl)cyclohexanes, le bis(p-aminocyclohexylméthane), la m-xylylène diamine et la p-xylylène diamine.

Des exemples d'acides utilisables sont les acides adipique, subérique, sébacique, glutarique, azélaïque, cyclohexanedicarboxylique, isophtalique et téréphtalique.

Il peut aussi s'agir de PA dérivés d'halogénures ou de diesters alkylés de ces acides, d'acides aminocarboxyliques tels que les acides 6-aminocaproïque, 6-aminocaprylique, 6-aminolaurique, 11-aminoundécanoïque et 12-aminododécanoïque par exemple, ou encore de lactames dérivés de ces acides, tels que le ε-caprolactame et le ω-dodécalactame par exemple.

Ces PA peuvent être dérivés de plus d'une amine ou de plus d'un acide ; des mélanges de PA différents sont aussi utilisables.

Des exemples de PA utilisables sont le polyhexaméthylène adipamide (nylon 66), le polyhexaméthylène sébacamide (nylon 610), le polycapramide (nylon 6) et le polydodécanamide (nylon 12), ainsi que les PA obtenus par réaction de condensation de m-xylylène diamine avec l'acide adipique (PAMXD6).

Des PA préférés sont le nylon 66 et le PAMXD6.

Les compositions selon l'invention contiennent généralement de 10 à 300 parties en poids de PA pour 100 parties en poids de PPS, de préférence de 25 à 250 parties en poids de PA pour 100 parties en poids de PPS.

Lorsqu'il est souhaitable que le PPS constitue la phase continue du mélange de PPS et de PA, par exemple dans le but de maintenir la résistance thermique des compositions selon l'invention à des valeurs plus élevées, ces dernières contiennent en général de 25 à 95 parties en poids de PA pour 100 parties en poids de PPS, de préférence de 35 à 80 parties en poids de PA pour 100 parties en poids de PPS.

Les compositions selon l'invention contiennent aussi un hydroxyde métallique dont le constituant principal est l'hydroxyde de magnésium. On entend désigner ci-après par "hydroxyde métallique" ceux dont le constituant principal est l'hydroxyde de magnésium (appelé ci-après plus simplement hydroxyde de magnésium, en faisant uniquement référence à son constituant principal), c'est-à-dire les composés contenant plus de 50 % en poids de Mg(OH)₂, de préférence plus de 90 % en poids de Mg(OH)₂, d'autres hydroxydes éventuellement présents étant par exemple l'hydroxyde de calcium, l'hydroxyde d'aluminium et l'hydroxyde de baryum ou des mélanges de ceux-ci. On peut utiliser un hydroxyde de magnésium naturel, tel que la brucite ou la némalite, ou un hydroxyde de magnésium synthétique obtenu par exemple par électrolyse d'un sel de magnésium ou par précipitation d'un sel de magnésium par la potasse ou la soude. Cet hydroxyde métallique peut se présenter sous forme de poudre, de granules ou de fibres. De bons résultats sont obtenus lorsque l'hydroxyde métallique est constitué essentiellement d'hydroxyde de magnésium.

Les compositions selon l'invention contiennent généralement de 20 à 350 parties en poids d'hydroxyde métallique pour 100 parties en poids de PPS, de préférence de 50 à 200 parties en poids pour 100 parties en poids de PPS. Les meilleurs résultats sont obtenus lorsque lesdites compositions contiennent de 75 à 150 parties en poids d'hydroxyde métallique pour 100 parties en poids de PPS.

Suivant un mode de réalisation préféré de la présente invention, les compositions à base de PPS, de PA et d'hydroxyde métallique contiennent en outre de 20 à 500 parties d'un matériau fibreux de renforcement pour 100 parties en poids de polysulfure de phénylène. L'incorporation de ce matériau a pour effet de maintenir les performances thermomécaniques et chimiques du PPS à des valeurs élevées. A titre d'exemples de matériaux fibreux de renforcement utilisables selon l'invention, on peut citer les fibres de verre, les fibres d'asbeste, les fibres de carbures ou de borures métalliques, les fibres d'alumine, de zircone, de silice, les fibres de gypse, les fibres d'aramide, etc.

Ces fibres ont en général un diamètre ne dépassant pas environ 30 µm, de préférence de 0,5 à 20 µm, et une longueur ne dépassant pas environ 15 mm, de préférence de 1 à 10 mm.

Le matériau fibreux de renforcement peut aussi appartenir à la famille des whiskers, qui sont des monocristaux filiformes de diamètre limité ; à titre d'exemples de whiskers utilisables selon l'invention, on peut citer les whiskers de titanate de potassium, de carbure de silicium, de nitrure de silicium, de bore, etc. Ces whiskers présentent en général un diamètre de 0,1 à 3 µm, de préférence de 0,1 à 2 µm et une longueur ne dépassant pas 100 µm, de préférence de 10 à 20 µm.

Les matériaux fibreux de renforcement préférés sont les fibres de verre et les fibres d'aramide.

Un matériau fibreux de renforcement tout particulièrement préféré est constitué par les fibres de verre, éventuellement traitées par des agents de couplage conventionnels. A titre de pareils agents on peut citer les silanes. Des exemples de fibres de verre utilisables sont les fibres de verre commercialisées sous les dénominations VETROTEX P388, P327, 5145 ; SILENKA 8087 et 8045 et OCF CS R23DX1 et R17BX1.

Les compositions selon l'invention contiennent de préférence de 25 à 250 parties en poids de matériau fibreux de renforcement pour 100 parties en poids de PPS. Les meilleurs résultats sont obtenus lorsque lesdites compositions contiennent de 90 à 220 parties en poids de matériau fibreux de renforcement pour 100 parties en poids de PPS.

Outre le PPS, le PA, l'hydroxyde métallique et, le cas échéant, le matériau fibreux de renforcement qui sont les constituants essentiels des compositions selon l'invention, ces dernières peuvent encore contenir éventuellement, en des quantités qui ne sont pas préjudiciables à leurs propriétés :
- d'autres charges telles que la wollastonite, le talc, le mica, l'argile, le kaolin, la bentonite, les carbonates et les sulfates de calcium et de magnésium, le phosphate de magnésium, les billes de verre, le dioxyde de titane, l'alumine, etc ;
- d'autres polymères thermoplastiques, tels que les polyéthercétones, les polyimides, les polyesters, les polysulfones, les polyéthersulfones, les polyétherimides, les polyphénylèneéthers, les polymères fluorés; les polyoléfines, le polystyrène, les polyacrylates d'alkyle, etc ;
- des élastomères, tels que les élastomères fluorés, les silicones, les caoutchoucs oléfiniques, les caoutchoucs acryliques, le caoutchouc butyle, etc.

On peut encore incorporer d'autres stabilisants à la lumière, à la chaleur et à l'oxydation ; des ignifugeants ; des colorants ; des pigments ; des lubrifiants ; des agents de démoulage facilitant la mise en oeuvre.

On peut aussi incorporer un agent de nucléation conventionnel du PA constitutif des compositions selon l'invention, tel que du talc et des phosphates de métaux alcalins et alcalino-terreux.

Les compositions selon l'invention peuvent être préparées selon toutes les techniques connues assurant un mélange intime et homogène de leurs constituants. Ainsi, on peut mélanger le PPS, le PA, l'hydroxyde métallique et, le cas échéant, le matériau fibreux de renforcement et les éventuels autres ingrédients et additifs à sec, puis les malaxer au fondu. Pour réaliser le mélange à sec, on peut utiliser n'importe quel mélangeur, tels les mélangeurs à ruban, les mélangeurs à tambour, les mélangeurs rapides commercialisés par les firmes HENSCHEL, LOEDIGE, DYOSNA, etc.

Pour réaliser le malaxage au fondu, on peut travailler indifféremment en malaxeurs du type externe, ou en malaxeurs du type interne, tels que ceux commercialisés par les firmes TROESTER, BANBURY, etc. Pour des raisons techniques et économiques, on préfère cependant travailler dans des malaxeurs du type interne et plus particulièrement dans des extrudeuses qui constituent une classe particulière de malaxeurs internes.

Les compositions selon l'invention sont aptes à la mise en oeuvre par tous les procédés classiques de transformation des matières plastiques et plus particulièrement par moulage par injection. Ces compositions conviennent pour la fabrication de toutes espèces d'objets façonnés et plus particulièrement de pièces injectées, présentant un excellent compromis de résistance thermique, de résistance au courant de cheminement et de résistance à l'arc, tels que des coupe-circuits, des barreaux multipolaires, des ampoules de coupure, des boîtiers de pièces électriques, etc.

Les exemples suivants servent à illustrer l'invention. Les exemples 1 à 3 et 7 sont réalisés selon l'invention. Les exemples 4R, 5R et 6R sont donnés à titre de comparaison.

### Exemples

On réalise des compositions en mélangeant à sec et en malaxant ensuite, à 280°C, dans une extrudeuse WERNER & PFLEIDERER ZSK-40 à double vis, les constituants de base mentionnés au Tableau ci-après dans des quantités qui sont aussi indiquées dans ce Tableau.

Les joncs extrudés sont granulés de manière conventionnelle et les granules obtenus sont injectés en plaques de 125 mm x 125 mm x 4 mm sur presse NETSTALL de 150T.

Ces plaques sont utilisées pour la détermination de l'indice de résistance au courant de cheminement (CTI) des compositions sur la base des prescriptions de la norme CEI 112.

Les résultats sont rassemblés au Tableau ci-après.

Ces plaques sont aussi utilisées pour la détermination de la résistance à l'arc (R_{arc}) des compositions sur la base des prescriptions de la norme ASTM D495.

Les résultats sont rassemblés au Tableau ci-après.

Enfin, on apprécie la résistance thermique des compositions en évaluant la perte de leur résistance en traction (mesurée selon la norme ASTM D638) sur des éprouvettes vieillies pendant 2000 heures à 180°C.

Les résultats sont aussi rassemblés au Tableau ci-après.

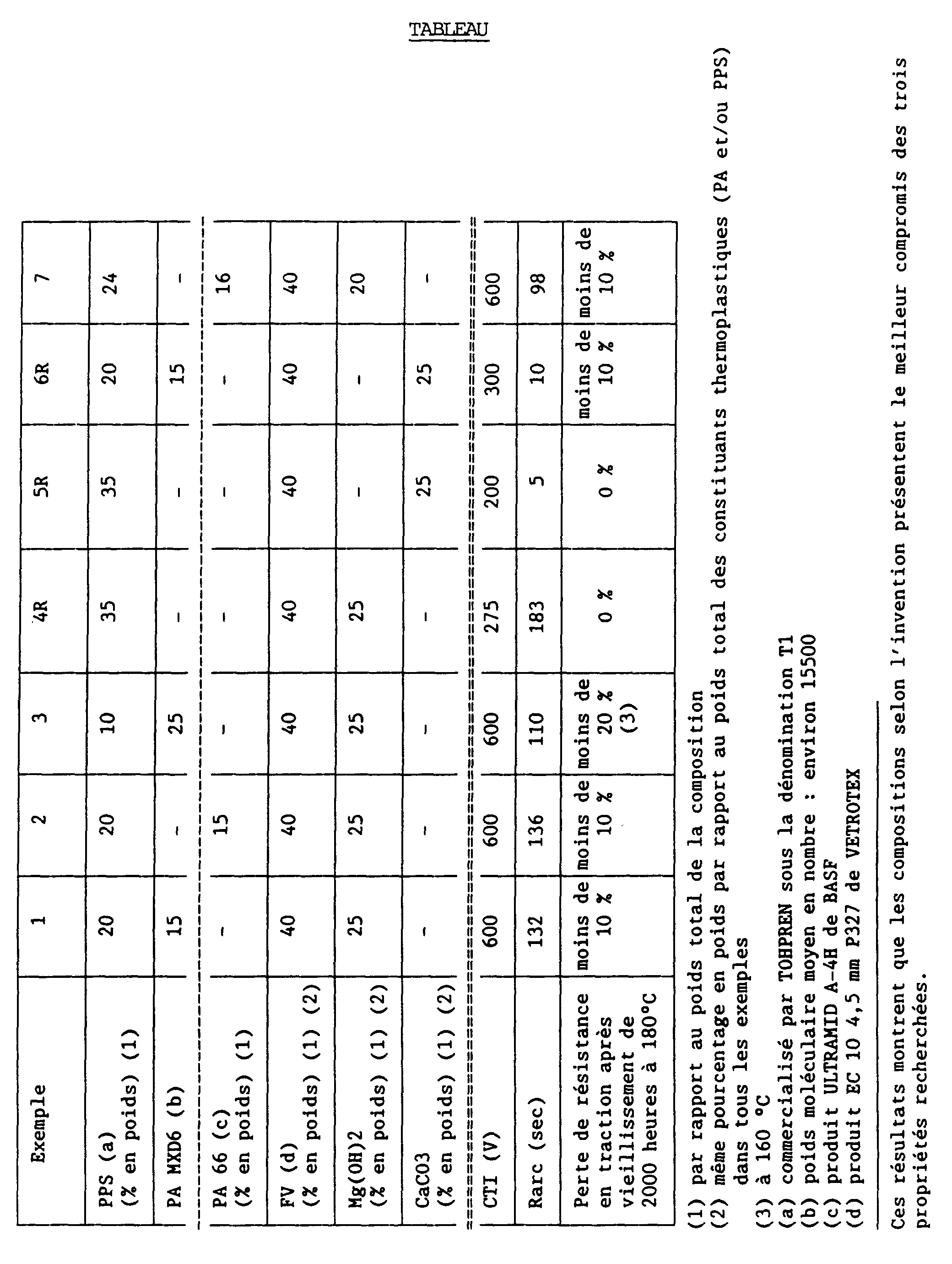

## Revendications

1. Compositions contenant, pour 100 parties en poids de polysulfure de phénylène :
10 à 300 parties en poids d'un polyamide,
et
20 à 350 parties en poids d'un hydroxyde métallique dont le constituant principal est l'hydroxyde de magnésium.

2. Compositions selon la revendication 1, **caractérisées en ce que** le polyamide résulte de la polycondensation de l'acide adipique avec la m-xylylène diamine.

3. Compositions selon la revendication 1, **caractérisées en ce que** le polyamide est le polyhexaméthylène adipamide.

4. Compositions selon l'une quelconque des revendications 1 à 3, **caractérisées en ce que** l'hydroxyde métallique est constitué essentiellement d'hydroxyde de magnésium.

5. Compositions selon l'une quelconque des revendications 1 à 4, **caractérisées en ce qu'**elles contiennent de 25 à 95 parties en poids de polyamide pour 100 parties en poids de polysulfure de phénylène.

6. Compositions selon l'une quelconque des revendications 1 à 5, **caractérisées en ce qu'**elles contiennent de 50 à 200 parties en poids d'hydroxyde métallique pour 100 parties en poids de polysulfure de phénylène.

7. Compositions selon l'une quelconque des revendications 1 à 6, **caractérisées en ce qu'**elles contiennent en outre de 20 à 500 parties d'un matériau fibreux de renforcement pour 100 parties en poids de polysulfure de phénylène.

8. Compositions selon la revendication 7, **caractérisées en ce que** le matériau fibreux de renforcement est constitué par des fibres de verre.

9. Compositions selon l'une quelconque des revendications 7 ou 8, **caractérisées en ce qu'**elles contiennent de 25 à 250 parties en poids de matériau fibreux de renforcement pour 100 parties en poids de polysulfure de phénylène.

10. Objets façonnés par moulage de compositions selon l'une quelconque des revendications 1 à 9.

## Claims

1. Compositions containing, per 100 parts by weight of polyphenylene sulphide:
10 to 300 parts by weight of a polyamide,
and
20 to 350 parts by weight of a metal hydroxide in which the main constituent is magnesium hydroxide.

2. Compositions according to Claim 1, **characterised in that** the polyamide results from the polycondensation of adipic acid with m-xylylenediamine.

3. Compositions according to Claim 1, **characterised in that** the polyamide is polyhexamethylene adipamide.

4. Compositions according to any one of Claims 1 to 3, **characterised in that** the metal hydroxide consists essentially of magnesium hydroxide.

5. Compositions according to any one of Claims 1 to 4, **characterised in that** they contain from 25 to 95 parts by weight of polyamide per 100 parts by weight of polyphenylene sulphide.

6. Compositions according to any one of Claims 1 to 5, **characterised in that** they contain from 50 to 200 parts by weight of metal hydroxide per 100 parts by weight of polyphenylene sulphide.

7. Compositions according to any one of Claims 1 to 6, **characterised in that** they additionally contain from 20 to 500 parts of a fibrous reinforcing material per 100 parts by weight of polyphenylene sulphide.

8. Compositions according to Claim 7, **characterised in that** the fibrous reinforcing material consists of glass fibres.

9. Compositions according to either of Claims 7 and 8, **characterised in that** they contain from 25 to 250 parts by weight of fibrous reinforcing material per 100 parts by weight of polyphenylene sulphide.

10. Objects formed by moulding compositions according to any one of Claims 1 to 9.

## Patentansprüche

1. Zusammensetzungen, umfassend pro 100 Gewichtsteile Polyphenylensulfid:
10 bis 300 Gewichtsteile eines Polyamids,
und
20 bis 350 Gewichtsteile eines Metallhydroxids, dessen Hauptbestandteil Magnesiumhydroxid ist.

2. Zusammensetzungen gemäß Anspruch 1, **dadurch gekennzeichnet, dass** das Polyamid aus der Polykondensation von Adipinsäure mit m-Xylylendiamin hervorgeht.

3. Zusammensetzungen gemäß Anspruch 1, **dadurch gekennzeichnet, dass** das Polyamid Polyhexamethylenadipinsäureamid ist.

4. Zusammensetzungen gemäß einem der Ansprüche 1 bis 3, **dadurch gekennzeichnet, dass** das Metallhydroxid im Wesentlichen aus Magnesiumhydroxid besteht.

5. Zusammensetzungen gemäß einem der Ansprüche 1 bis 4, **dadurch gekennzeichnet, dass** sie 25 bis 95 Gewichtsteile Polyamid pro 100 Gewichtsteile Polyphenylensulfid enthalten.

6. Zusammensetzungen gemäß einem der Ansprüche 1 bis 5, **dadurch gekennzeichnet, dass** sie 50 bis 200 Gewichtsteile Metallhydroxid pro 100 Gewichtsteile Polyphenylensulfid enthalten.

7. Zusammensetzungen gemäß einem der Ansprüche 1 bis 6, **dadurch gekennzeichnet, dass** sie außerdem 20 bis 500 Teile eines faserförmigen Verstärkungsmaterials pro 100 Gewichtsteile Polyphenylensulfid enthalten.

8. Zusammensetzungen gemäß Anspruch 7, **dadurch gekennzeichnet, dass** das faserförmige Verstärkungsmaterial aus Glasfasern besteht.

9. Zusammensetzungen gemäß einem der Ansprüche 7 oder 8, **dadurch gekennzeichnet, dass** sie 25 bis 250 Gewichtsteile faserförmiges Verstärkungsmaterial pro 100 Gewichtsteile Polyphenylensulfid enthalten.

10. Gegenstände, geformt durch Gießen von Zusammensetzungen gemäß einem der Ansprüche 1 bis 9.
